Europäisches Patentamt

European Patent Office

Office européen des brevets

(19)

(11) Publication number: **0 178 782**
**B1**

(12) **EUROPEAN PATENT SPECIFICATION**

(45) Date of publication of patent specification: 26.04.89

(21) Application number: 85306512.6

(22) Date of filing: 13.09.85

(51) Int. Cl.⁴: **F 04 C 11/00, F 02 B 77/14,**
**F 02 B 67/04, B 60 T 17/02,**
**F 01 M 1/02, F 01 M 1/12**

(54) Tandem pump assembly.

(30) Priority: 05.10.84 US 658278

(43) Date of publication of application:
23.04.86 Bulletin 86/17

(45) Publication of the grant of the patent:
26.04.89 Bulletin 89/17

(84) Designated Contracting States:
DE FR GB IT SE

(56) References cited:
EP-A-0 052 760
EP-A-0 109 274
DE-B-1 052 166
GB-A-2 026 612
US-A-1 585 731

(73) Proprietor: GENERAL MOTORS CORPORATION
General Motors Building 3044 West Grand
Boulevard
Detroit Michigan 48202 (US)

(72) Inventor: Dzioba, Donald Louis
2434 Peterson Drive
Sanford Michigan 48657 (US)

(74) Representative: Haines, Arthur Donald et al
Patent Section (F6) Vauxhall Motors Limited
P.O. Box 3 Kimpton Road
Luton, Beds. LU2 OSY (GB)

EP 0 178 782 B1

Courier Press, Leamington Spa, England.

**Description**

This invention relates to a tandem pump assembly as specified in the preamble of claim 1, for example as disclosed in UK-A-2 026 612.

The broad idea of combining one pump with another in tandem is not new. It is known, for example, to combine a vacuum pump with the power steering pump in a motor vehicle where an internal combustion engine used to power the vehicle lacks sufficient manifold vacuum to operate one or more vacuum motors for the control system(s) of the vehicle. However, such an additional pump normally requires additional under-hood space adjacent the engine, which may not be normally available.

The present invention is concerned with providing a tandem pump assembly wherein the size of the added pump is minimized.

To this end, a tandem pump assembly in accordance with the present invention is characterised by the features specified in the characterising portion of claim 1.

Thereby, the size requirement for the second pump is minimized by the inclusion of a simply incorporated overdrive in the first pump, inasmuch as the drive provided to the second pump by the said other gear of the first pump, namely the gear having the smaller pitch diameter, is at a higher speed than the input speed of the first pump, and as a result the second pump can be sized smaller than if it were driven at the same speed as the first pump.

In accordance with the invention, for use in a motor vehicle, the entire tandem pump arrangement is located in the oil pan of the engine powering the vehicle. The gear pump in this case is adapted to serve as the engine's oil pump, and the additional pump is adapted to serve as a vacuum pump to meet the vehicle's vacuum requirements. The gear-type oil pump is conveniently driven in the normal manner by the engine camshaft, which in turn is driven by the engine's crankshaft at half crankshaft speed. However, with the overdrive provided by the gear-type oil pump to the vacuum pump, the vacuum pump is driven at increased speed relative to the oil pump. This permits the latter pump to be downsized, through selection of the gear ratio of the oil pump gears, to thereby minimize the space required for the tandem assembly, comprising the vacuum pump together with the engine's oil pump, disposed in the oil pan of the engine.

Moreover, this arrangement provides design flexibility, in that the vacuum pump can readily be added as desired and without requiring special or additional under-hood space, which may not be normally available.

Not only can the second pump be made smaller, but also it can be made lighter and with fewer parts, as well as easier to manufacture and assemble, with the elimination of some tolerance stack-ups, all these features permitting reduction in costs.

In EP-A-0 052 760 there is disclosed an engine-driven pump arrangement in which a gear pump acting as a lubricating oil pump also constitutes step-down gearing for driving a centrifugal pump acting as a coolant pump.

In the drawings:

Figure 1 is a fragmentary elevational view, partially in section, of a preferred embodiment of a tandem pump assembly in accordance with the present invention, arranged in the engine of a motor vehicle to serve as an oil pump and vacuum pump;

Figure 2 is a view along the line 2--2 in Figure 1, in the direction of the arrows;

Figure 3 is a view along the line 3--3 in Figure 1, in the direction of the arrows; and

Figure 4 is an isometric view of the basic operating parts of the tandem pump assembly shown in Figure 1.

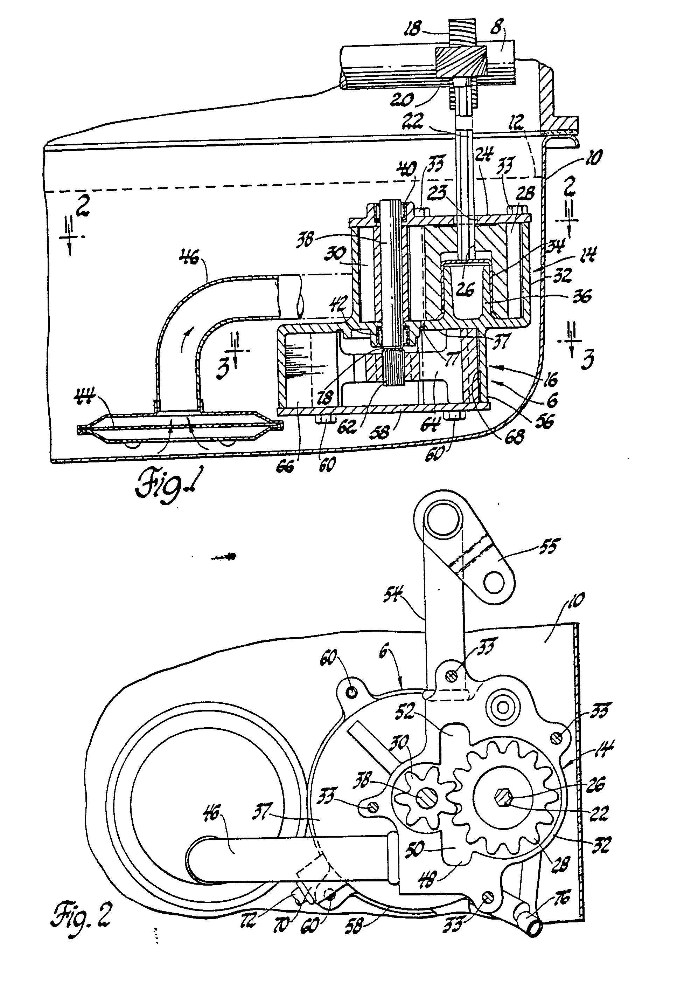

With reference now to Figure 1 of the drawings, a preferred embodiment of a tandem pump assembly in accordance with the present invention is generally designated as 6 and is adapted for use in the engine of a motor vehicle, only those parts considered helpful to an understanding of the present invention being shown. The vehicle engine includes the normal camshaft 8 which is driven from the engine crankshaft (not shown) at half crankshaft speed in a manner well-known and common to reciprocating engines. In addition, the engine typically has beneath the camshaft 8 an oil pan (sump) 10 in which oil for engine lubrication is normally maintained at the level indicated as 12.

The tandem pump assembly 6 is mounted in the oil pan 10 below the oil level 12 and comprises a gear-type pump section 14 and a tandemly arranged vane-type pump section 16, with the former adapted to supply the oil under pressure to lubricate the engine and the latter adapted to meet the various vacuum requirements of the vehicle, such as vacuum-assisted power brakes, exhaust gas recirculation, cruise control and heating/air conditioning controls (not shown).

Drive to the tandem pump assembly is provided by a helical drive gear 18 which is fixed to the camshaft 8 and meshes with a helical driven gear 20. The latter gear is rotatably mounted and axially retained in a conventional manner in the engine, and is connected to the upper end of a pump input shaft 22 that is of hexagonal cross-section and extends at right angles to the camshaft 8. The pump input shaft 22 extends with clearance through a hole 23 in a top cover plate 24 of the gear pump section 14, and engages in a hexagonal hole 26 in a pump gear 28. The pump gear 28 meshes with a second pump gear 30, with both these gears being rotatably mounted in a housing 32 that is closed by the cover plate 24, which is secured by bolts 33 (Figures 1 and 2).

The pump gear 28 is rotatably supported by a bearing cap 34 that is fitted on an upstanding stationary stub shaft 36 which is integral with the bottom side 37 of the housing and acts as a stop for the lower end of the pump input shaft 22. The other pump gear 30, which is thus driven by the input-driven pump gear 28, is rotatably supported in the housing 32 by being affixed to a shaft 38 that is rotatably supported at its upper end in the top cover plate 24 by a needle bearing 40 and is rotatably supported adjacent its lower end by a needle bearing 42 in the bottom side 37 of the housing 32.

The oil is drawn in from the bottom of the oil pan 10 through a filter 44 and an intake tube 46 into the suction side 48 of a gear pump cavity 50 by the displacement action of the meshing gears 28 and 30, with the former gear driving the latter and thus the shaft 38. The oil thus taken into the gear spaces is displaced into the pressure side 52 of the gear pump cavity, from which it is delivered to the engine's lubrication system via an outlet pipe 54, with a bracket 55 fixed to the exit end of this tube serving to secure the tandem pump assembly 6 to the engine and in place in the oil pan 10.

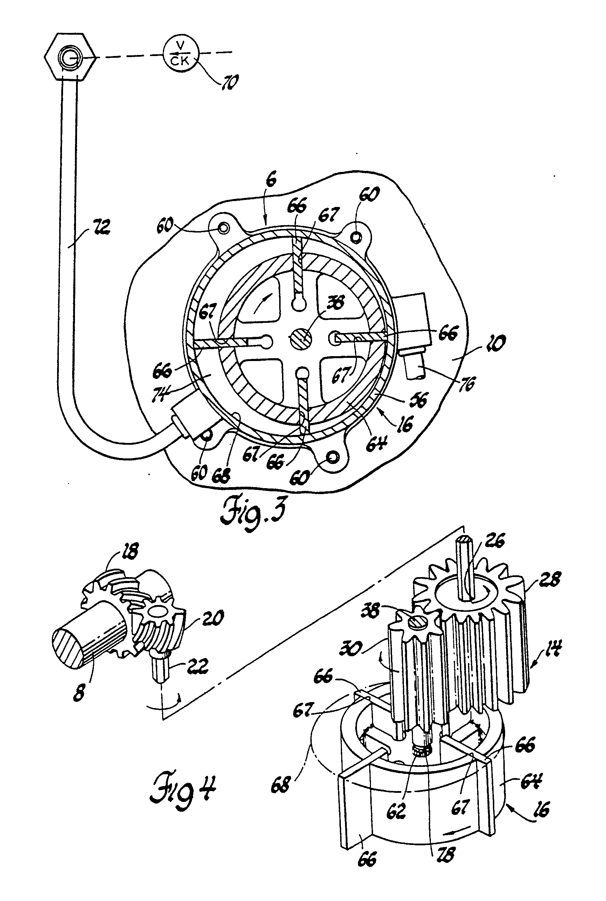

The driven shaft 38 in the gear pump section 14 is used as the input to drive the vane pump section 16, and to that end extends through and past (beneath) the bottom side 37 of the housing 32 into the vane pump section 16, the upper side of which is formed by the bottom side 37 of the gear pump housing 32 and a peripheral housing 56 of which is clamped thereagainst by a bottom cover plate 58 secured by bolts 60 (Figures 1 and 3).

In the vane pump section 16, the shaft 38 is drivingly connected at its lower end by spline-like serrations 62 to a rotary input member constituted by a rotor 64 on which a plurality of vanes 66 are slidably supported in slots 67 for radial movement. The vanes 66 engage a cylindrical surface 68 in the housing 56 eccentric to the rotor axis (i.e. the axis of the shaft 38), whereby the vanes 66 are caused to reciprocate on the rotor 64 during rotation thereof to produce a pumping action in a well-known and conventional manner.

In the vane pump section 16, air is drawn in through a vacuum intake check valve 70 (Figure 3) and an intake tube 72 into the intake quadrant of the vane pump cavity 74. The air is taken into the expanding volumes between the vanes 66 in the intake quadrant, and discharged from the diminishing volumes between the vanes 66 in the discharge quadrant through a vacuum exhaust tube 76 into the engine sump above the oil level 12. The vane pump is lubricated by the oil in the sump, and because of the exhaust exit to the sump, lubrication oil is returned thereto and is not lost.

In the drive thus effected through the meshing oil-pump gears to the vacuum pump, an overdrive is simply provided by the engine-driven oil pump gear 28 being formed with a larger pitch diameter than that of the other oil pump gear 30 that it drives. For example in the specific construction shown the pitch diameter of the oil pump drive gear 28 is made twice that of the oil pump driven gear 30, thus producing a 1:2 pitch diameter ratio (gear ratio). As a result, the vane pump rotor 64 is driven at twice the speed of the input to the oil pump, thereby allowing the vane pump to be made half the displacement size that would be required if it were driven at the same speed as the oil pump.

In addition to the overdrive feature in the gear pump which permits minimizing the size of the vane pump through selection of the overdrive ratio, other features in the arrangement include the formation of a V-notch 78 in the vacuum pump drive shaft 38 between the overdriven oil pump gear 30 and the vane pump rotor 64 (Figures 1 and 4). This V-notch is sized so that should the vane-type vacuum pump seize or stop rotating for any reason, the shaft 38 will shear at this notch, to permit the gear-type engine oil pump to continue to function undisturbed.

Furthermore, due to the combining of the vane pump with the gear pump, the housing 32 of the gear pump is common to both units, in that in addition to serving as the main housing for the pump gears, it also serves at its bottom side 37 as a side housing for the vane pump, thereby saving both space and materials. Moreover, the tandem pump assembly is of a modular type, permitting the vacuum pump to be selectively added at engine dress, thereby further reducing costs. In addition, there is one simple built-in drive mechanism for the vacuum pump rather than the need to supply belts, pulleys and the like to drive the vacuum pump separately. Furthermore, there is no need for separate vacuum pump bracketing, since the vacuum pump is integrally mounted with the oil pump. Moreover, there is additional under-hood space saving in that the belt train space available for other accessories is freed from any requirement relative to the vacuum pump.

Although the preferred embodiment of the tandem pump assembly is shown adapted to operate as an oil pump and vacuum pump in a motor vehicle installation, the tandem pump assembly arrangement of the present invention with overdrive by the gear pump to the second pump may have other applications, and the latter pump need not be a vane pump but could for example be a compressor of the gear type or some other type such as a centrifugal pump where increased input speed thereto relative to that of the first pump is of benefit.

**Claims**

1. A tandem pump arrangement in which a rotary input shaft (22) drives a gear-type first pump (14) and also a second pump (16), the tandem pump arrangement is mounted in an oil pan (10) of an engine, the oil pan (10) containing oil at a certain level (12), the first pump (14) is an oil pump for delivering oil under pressure to lubricate the engine and the second pump (16) is a vacuum pump for establishing a vacuum, and the vacuum pump (16) is arranged to be lubricated by the oil in the oil pan (10) and has an exhaust line (76) exiting in the oil pan (10) above the oil level (12) thereof so as to ensure the return of such oil to the oil pan (10), characterised in that the first pump (14) has two meshing gears (28 and 30) of different pitch diameters adapted to produce pumping action by their meshing engagement upon drive to the one gear (28) having the larger pitch diameter and the drive thereby of the other gear (30) having the smaller pitch diameter at a higher speed, the engine is connected by way of drive means (8, 18, 20, 22) to drive the said one gear (28), and the second pump (16) has an input connected to be driven by the said other gear (30) whereby the second pump (16) is driven by way of the first pump (14) at increased speed with an overdrive ratio determined by the ratio of the pitch diameters of the meshing gears (28 and 30).

2. A tandem pump arrangement according to claim 1, characterised in that the input of the second pump (16) is connected directly to a shaft (38) which is fixed to rotatably support and be driven by the said other gear (30) of the first pump (14).

## Patentansprüche

1. Tandemverbundpumpe, bei der eine sich drehende Eingangswelle (22) eine erste Pumpe (14) vom Zahnradtyp und auch eine zweite Pumpe (16) antreibt, die Tandempumpenanordnung in einer Ölwanne (10) eines Motors angebracht ist, die Ölwanne (10) Öl mit einem bestimmten Niveau (12) enthält, die erste Pumpe (14) eine Ölpumpe zum Liefern von Drucköl zur Schmierung des Motors und die zweite Pumpe (16) eine Vakuumpumpe zur Erzeugung eines Unterdrucks ist und die Vakuumpumpe (16) zur Schmierung durch das Öl in der Ölwanne (10) angeordnet ist und eine Abgasleitung (76) besitzt, die in der Ölwanne (10) über deren Ölniveau (12) so austritt, daß die Rückkehr solchen Öls zur Ölwanne (10) sichergestellt ist, dadurch gekennzeichnet, daß die erste Pumpe (14) zwei miteinander kämmende Zahnräder (28 und 30) mit unterschiedlichem Rollkreisdurchmesser besitzt, die zur Erzeugung der Pumpwirkung durch ihren Kämmeingriff bei Antrieb des einen Zahnrades (28) mit dem größeren Rollkreisdurchmesser und dem dadurch erzeugten Antrieb des anderen Zahnrades (30) mit dem kleineren Rollkreisdurchmesser mit höherer Geschwindigkeit ausgelegt ist, der Motor über Antriebsmittel (8, 18, 20, 22) zum Antreiben des einen Zahnrades (28) verbunden ist und die zweite Pumpe (16) einen zum Antrieb durch das andere Zahnrad (30) angeschlossenen Eingang besitzt, wodurch die zweite Pumpe (16) über die erste Pumpe (14) mit erhöhter Geschwindigkeit angetrieben wird mit einem durch das Verhältnis der Rollkreisdurchmesser der miteinander kämmenden Zahnräder (28 und 30) bestimmten Übersetzungsverhältnis.

2. Tandemverbundpumpe nach Anspruch 1, dadurch gekennzeichnet, daß der Eingang der zweiten Pumpe (16) direkt mit einer Welle (38) verbunden ist, die befestigt ist, um das andere Zahnrad (30) der ersten Pumpe (14) drehbar abzustützen und durch dieses angetrieben zu werden.

## Revendications

1. Agencement de pompes en tandem dans lequel un arbre d'entrée rotatif (22) entraîne une première pompe du type à engrenages (14), ainsi qu'une seconde pompe (16), cet agencement de pompes en tandem étant monté dans un carter d'huile (10) d'un moteur, ce carter d'huile (10) contenant de l'huile à un certain niveau (12), la première pompe (14) étant une pompe à huile destinée à envoyer de l'huile sous pression afin de lubrifier le moteur et la seconde pompe (16) étant une pompe à dépression destinée à créer une dépression, tandis que cette pompe à dépression (16) est agencée de façon à être lubrifiée par l'huile présente dans le carter d'huile (10) et qu'elle présente une tuyauterie d'échappement (76) débouchant dans le carter d'huile (10), au-dessus du niveau d'huile (12) de celui-ci, de façon à assurer le renvoi de cette huile au carter d'huile (10), caractérisé en ce que la première pompe (14) possède deux engrenages (28 et 30) qui engrènent et sont de diamètres de cercles primitifs différents et qui sont destinés à produire une action de pompage, grâce à leur venue en prise à engrènement, lors de l'entraînement exercé sur le premier engrenage (28) possédant le plus grand diamètre de cercle primitif et de l'entraînement, par celui-ci et à une vitesse supérieure, de l'autre engrenage (30) possédant le plus petit diamètre de cercle primitif, le moteur étant relié à l'aide de moyens d'entraînement (8, 18, 20, 22) de façon à entraîner le premier engrenage (28), tandis que la seconde pompe (16) possède un élément d'entrée relié de façon à être entraîné par le second engrenage (30), de sorte que cette seconde pompe (16) est entraînée au moyen de la première pompe (14), à une vitesse accrue et avec un rapport de multiplication déterminé par le rapport des diamètres de cercle primitif des engrenages (28 et 30) qui engrènent.

2. Agencement de pompes en tandem suivant la revendication 1, caractérisé en ce que l'élément d'entrée de la seconde pompe (16) est relié directement à un arbre (38) qui est fixé de façon à porter de manière rotative le second engrenage (30) de la première pompe (14) et à être entraîné en rotation par celui-ci.

Fig 1

Fig. 2

1

Fig.3

Fig 4